# EUROPEAN PATENT APPLICATION

(11) **EP 4 744 916 A1**
(43) Date of publication of application: **20.05.2026**
(21) Application number: 25216030.4
(22) Date of filing: 14.11.2025
(51) Int. Cl.: B60G 3/20, B60G 7/00, B60G 7/02, B60R 21/00

(54) **ROAD VEHICLE WITH CONTROLLED DETACHMENT OF FRONT WHEELS IN CASE OF ANGLED FRONTAL CRASH**

(30) Priority: 15.11.2024 IT 202400025860
(71) Applicant: FERRARI S.p.A., 41100 Modena (IT)
(72) Inventor: TOLLARI, Davide, 41100 MODENA (IT); BATTAGLIA, Gaetano, 41100 MODENA (IT); LONGHI, Daniel, 41100 MODENA (IT); NARDUCCI, Angelo, 41100 MODENA (IT)
(74) Representative: Studio Torta S.p.A.

(57) **Abstract**

A road vehicle having a roll axis, a pitch axis, a yaw axis, a chassis and two front wheels; wherein each front wheel comprises a front suspension lever connecting the corresponding front wheel to the chassis; wherein each front suspension lever is substantially shaped in the form of a triangle with a first vertex coupled to the corresponding front wheel and the remaining two vertices coupled to the chassis at a front attachment point and at a rear attachment point, respectively, with respect to the direction of travel along the roll axis; wherein the coupling between the front vertex of the front suspension lever and the chassis comprises a break-in invitation zone.

## Description

### Cross-Reference To Related Applications

This patent application claims priority from Italian patent application no. 102024000025860 filed on November 15, 2024, the entire disclosure of which is incorporated herein by reference.

### Technical Field Of The Invention

The technical field of reference for the invention is that relating to road vehicles. In this technical field, the invention will address the problem of offering the public a particularly advantageous additional functionality in case of angled frontal crash.

### State Of The Art

As it is known, a road vehicle is defined by a roll axis, a pitch axis and a yaw axis. The vehicle comprises a chassis, two front wheels and two rear wheels. The wheels identify the points of contact of the vehicle with respect to the ground, whereas the chassis is connected to the wheels in a suspended configuration with respect to the ground by means of suitable suspensions. These elements are well known to a person skilled in the art and, therefore, no further details are necessary for the correct understanding of the background in which the invention is applied. In particular, each suspension comprises lever elements connected, on one side, to the corresponding wheel and, on the other side, to the chassis. The points of attachment of the suspension levers to the chassis are of course suitably sized to ensure a stable and lasting coupling. This absolutely necessary aspect, however, turns out to be problematic in a particular situation, namely in case of an angled frontal crash. An angled frontal crash is an impact between a vehicle and an obstacle, in which the obstacle is in the form of a surface that creates an angle other than 90° with respect to the direction of travel of the vehicle. This angled crash, therefore, generates forces on the front wheels of the vehicle, which are different from one another. In particular, one of the front wheels is subjected to a much greater impact than the other and, precisely because of the angle between the obstacle and the direction of travel of the vehicle, this more stressed wheel could hit against the chassis, to which it remains attached through the corresponding points of attachment between suspension and chassis. The damages caused by such an impact could lead to the partial collapse of the chassis and, therefore, to risks for the safety of the passengers and also to significant costs and times for the repair of the vehicles. The problem is felt to the point that the American regulation known as "FMVSS 208 regulation" provides for cars to pass an impact test at approximately 48km/h against a barrier inclined by 30° with respect to the direction of travel.

### Subject-matter And Summary Of The Invention

Starting from the prior art described above, in which, in the event of an angled crash, one of the front wheels impacts against the chassis to which it is attached by the suspension, the object of the invention is to offer a solution in which, with the same crash, the collapse of the chassis caused by the impact with the wheel is avoided and, therefore, the damage caused to the passenger compartment is reduced.

According to the invention, this object is reached thanks to a vehicle as claimed in the appended claims.

The starting point of the invention is a road vehicle with a roll axis, a pitch axis, a yaw axle, a chassis and two front wheels. For each front wheel, the vehicle comprises a front suspension lever, which connects the corresponding front wheel to the chassis. Each front suspension lever is substantially shaped like a triangle with a first vertex coupled to the corresponding front wheel and the remaining two vertices coupled to the chassis at a front attachment point and at a rear attachment point, respectively, with respect to the direction of travel along the roll axis. In this context, the main aspect of the invention is to provide that the coupling between the front vertex of the front suspension lever and the chassis comprises a break-in invitation zone for generating and controlling the partial detachment of the wheel from the chassis in the event of angled crashes. Thanks to this weakening of the coupling of the front vertex of the front suspension lever, when a stress threshold is exceeded (which is lower compared to the prior art, which lacks said weakening), the coupling gives way and, in the event of an angled crash, the wheel is no longer trapped along the trajectory between the obstacle/rigid wall and the passenger compartment, but it can instead move backward, thus reducing the load that the passenger compartment must withstand.

As disclosed more in detail with reference to the figures, from a structural point of view, the coupling between the front vertex of the front suspension lever and the chassis is preferably obtained by providing:
- the front vertex of the front suspension lever is shaped in the form of a bushing with its axis parallel to the roll axis;
- a through pin inserted into the front bushing of the front suspension lever with a central portion for the coupling to the bushing and two ends fixed to the chassis, respectively a front end and a rear end on opposite sides with respect to the bushing;
wherein, between the central portion and the front end and/or between the central portion and the rear end, the pin comprises one or two narrowing/s or reduced cross-sectional area/s to create one or two weakened zone/s with lower mechanical strength and greater propensity to fracture.

In addition to having weakened the coupling pin between the front vertex of the front suspension lever and the chassis, the invention also provides an embodiment in which the front suspension lever itself is strengthened so as to increase, in the event of an angled frontal crash, the force acting upon the weakened coupling pin between the front vertex of the front suspension lever and the chassis.

From a constructive point of view, for example, a rib can be provided, which extends substantially from the first vertex coupled to the corresponding front wheel to the rear vertex coupled to the chassis.

### Brief Description Of The Drawings

The invention will be best understood upon perusal of the following detailed description of some embodiments thereof, by mere way of non-limiting example, with reference to the accompanying drawings, in which:
- figure 1 is a schematic view of a road vehicle shortly before and angles crash;
- figure 2 is a schematic view of a road vehicle of figure 1, in which the front wheels and the corresponding suspensions are visible;
- figure 3 is a schematic view of a road vehicle of figure 2 shortly after the angled crash, in which, according to the prior art, a front wheel impacts against the chassis;
- figures 4 and 5 are schematic views showing the components of the suspension affected by the invention;
- figure 6 is a schematic view of a road vehicle of figure 2 shortly after the angled crash, in which, according to the invention, a front wheel does not impact against the chassis;
- figures 7 and 8 respectively show how a component of the suspension is modified according to an embodiment of the invention;
- figure 9 shows the new component of figure 8 installed in the suspension;
- figures 10 and 11 respectively show how a second component of the suspension is modified according to an embodiment of the invention;
- figure 12 shows an enlarged detail of figure 9 to show the new component of figure 11 installed in the suspension.

### Preferred Embodiments Of The Invention

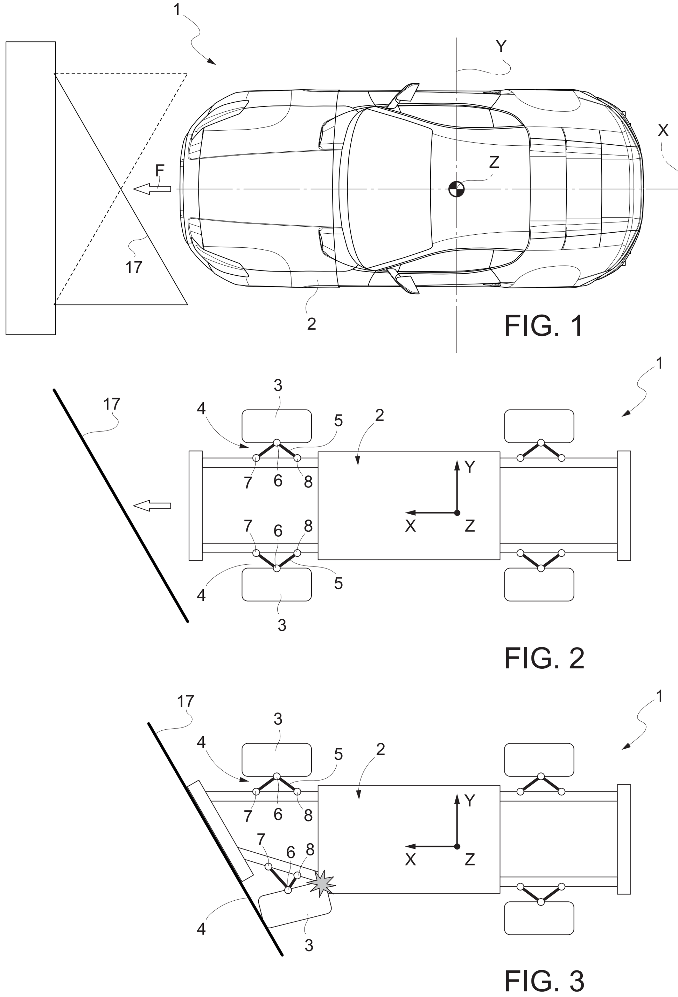

Figures 1 and 2 schematically show a vehicle 1, which is moving along the direction F parallel to the roll axis X of the vehicle (roll axis X orthogonal to the pitch axis Y and yaw axis Z). Reference number 17 identifies a barrier-shaped obstacle having an angle of 30° with respect to the direction F. In other words, figures 1 and 2 show a vehicle shortly before an angled frontal crash. Figure 2, in particular, shows some components of the vehicle that will be affected by the angled crash, namely the chassis 2, the front wheels 3 and the corresponding front suspensions 4. In this example, each front suspension 4 comprises a triangle-shaped lever 5. Reference numbers 6, 7 and 8 respectively identify the points of attachment of this triangle lever to the wheel 3 and the frame 2. As one can clearly seen, there are a front attachment point 7 and a rear attachment point 8 with respect to the direction of travel F.

Figure 3 schematically shows the situation that occurs after the crash. Since the obstacle is angled, a front wheel is trapped between the obstacle and the chassis to which it remains coupled at the points of attachment 6 and 7. In this configuration, the wheel 3 impacts against the chassis 2, as schematically shown.

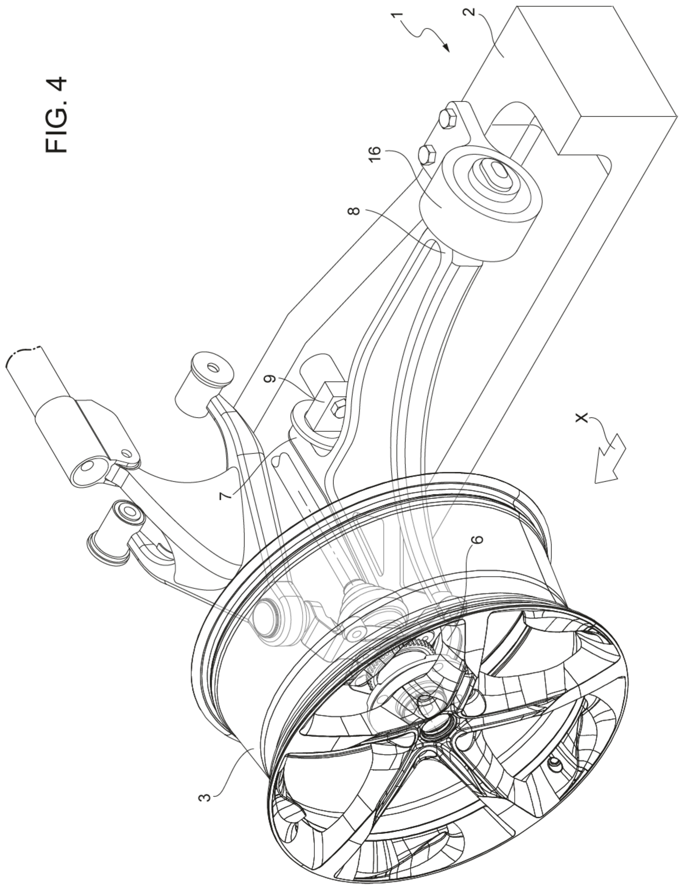

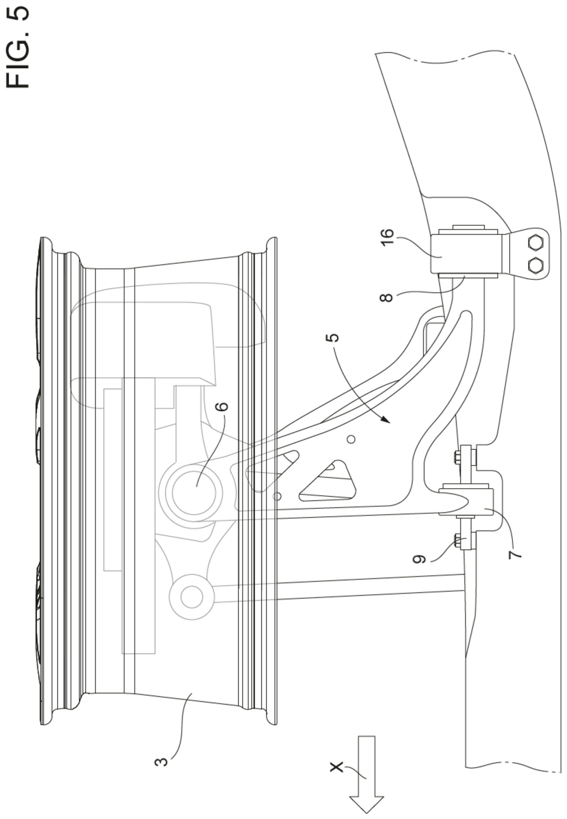

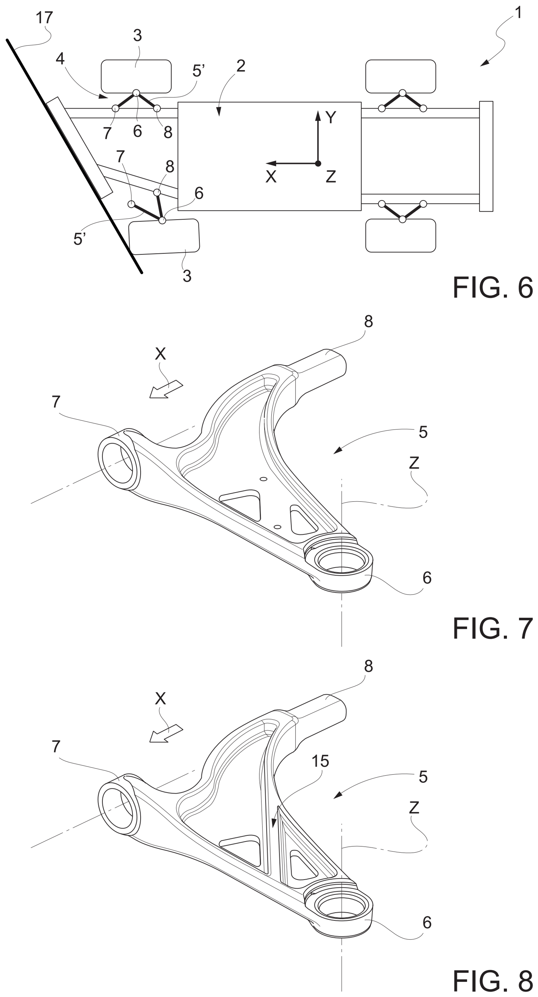

Figures 4 and 5 schematically show some constructive elements relevant to the invention (figure 5 is a view along the yaw direction Z from the bottom to the top). These figures, as well as figure 7, which isolates the lever 5 in the form of a triangle, show how the first vertex 6 is made in the form of a bushing with an axis parallel to the yaw direction Z, the front vertex 7 is made in the form of a bushing with an axis parallel to the roll direction X and the rear vertex 8 is made in the form of a pin coupled to a bushing 16 constrained to the chassis 2 with an axis parallel to the roll direction X. Reference number 9 in figure 5 outlines a pin going through the bushing 7 and which is fixed to the chassis 2 at its ends on opposite sides with respect to the bushing 7.

Figure 6 shows how, according to the invention, after the angled crash, the wheel 3, which had previously been trapped by impacting against the chassis 2, no longer impacts against the chassis, thanks to the fact that the coupling between the front vertex 7 and the chassis 2 gives way in a controlled manner.

Figures 7 and 8 respectively show how a component of the suspension is modified according to an embodiment of the invention in order to achieve the configuration of figure 6. In particular, according to this example, the coupling between the front vertex 7 and the chassis 2 is released during the impact due to a rib 15 obtained on the lever 5, which strengthens the lever itself and, therefore, in the event of a crash, transfers greater stress to the coupling between the front vertex 7 and the chassis 2. In this example, the rib 15 develops from the vertex 6 of the wheel 3 to the rear vertex 8 of the chassis 2.

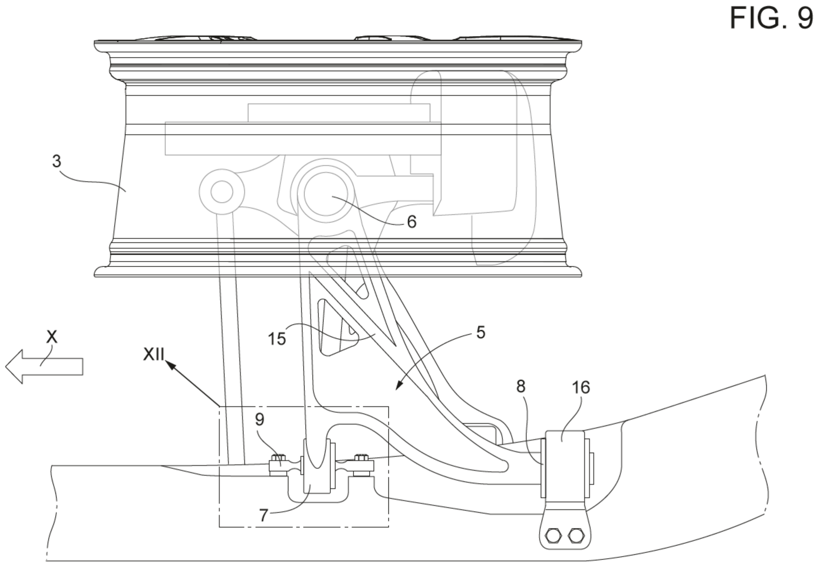

Figure 9 shows the new lever 5 of figure 8 installed in the suspension 4.

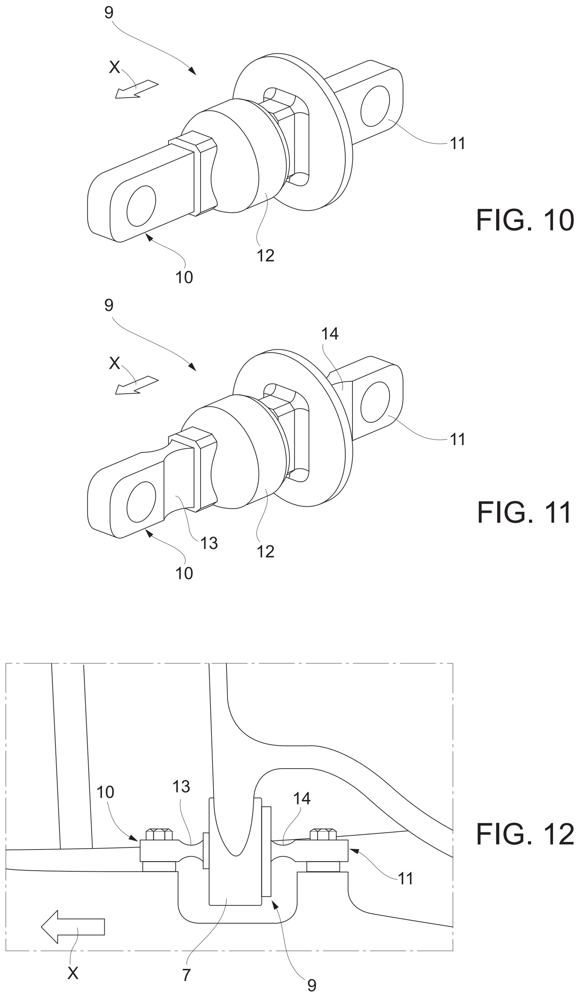

Figures 10 and 11 respectively show how a second component of the suspension 4 is modified according to an embodiment of the invention. In particular, these figures show the pin 9 going through the bushing 7 and coupled to the chassis 2 at the opposite ends with respect to the bushing 7. Reference numbers 12, 10 and 11 respectively identify the central portion of the pin 9 for the coupling to the bushing 7 and the front 10 and rear 11 ends on opposite sides with respect to the bushing. As one can seen in this example, the ends 10 and 11 are provided with holes for coupling the pin 9 to the chassis 2 by means of screws or bolts. As shown in figure 11 and in the detail of figure 12, according to this example, the pin 9 is modified by providing:
- between the central portion 12 and the front end 10, a narrowing or reduced cross-sectional area 13 and
- between the central portion 12 and the rear end 11, a narrowing or reduced cross-sectional area 14. By so doing, weakened areas of the pin 9 are created, which feature a smaller mechanical strength and a greater propensity to break in the event of angled crashes.

Finally, it is clear that the embodiments of the invention disclosed and shown herein can be subjected to changes and variations, without for this reason going beyond the scope of protection of the invention defined in the appended claims.

## Claims

1. A road vehicle (1) having a roll axis (X), a pitch axis (Y), a yaw axis (Z), a chassis (2) and two front wheels (3); wherein each front wheel (3) comprises a front suspension lever (5) connecting the corresponding front wheel (3) to the chassis (2); wherein each front suspension lever (5) is substantially shaped in the form of a triangle with a first vertex (6) coupled to the corresponding front wheel (3) and the remaining two vertices (7, 8) coupled to the chassis (2) respectively to a front attachment point and a rear attachment point with respect to the direction of travel along the roll axis (X); **characterised in that** the coupling between the front vertex (7) of the front suspension lever (5) and the chassis (2) comprises a break-in invitation zone.

2. Vehicle as claimed in claim 1, wherein the coupling between the front vertex (7) of the front suspension lever (5) and the chassis (2) is realised by providing:
- the front vertex (7) of the front suspension lever (5) is shaped in the form of a bushing with its axis parallel to the roll axis (X);
- a through pin (9) inserted into the front bushing (7) of the front suspension lever (5) with a central portion (12) coupling with the bushing (7) and two ends fixed to the frame (2), respectively a front end (10) and a rear end (11) from opposite sides to the bushing (7);
wherein between the central portion (12) and the front end (10) the pin (9) comprises a narrowing or reduced cross-sectional area (13) to create a weakened zone with lower mechanical strength and greater propensity to fracture.

3. Vehicle as claimed in any one of the preceding claims, wherein the coupling between the front vertex (7) of the front suspension lever (5) and the chassis (2) is made by providing:
- the front vertex (7) of the front suspension lever (5) is shaped in the form of a bushing with its axis parallel to the roll axis (X);
- a through pin (9) inserted into the front bushing (7) of the front suspension lever (5) with a central portion (12) coupling with the bushing (7) and two ends fixed to the frame (2), respectively a front end (10) and a rear end (11) from opposite sides to the bushing (7);
wherein between the central portion (12) and the rear end (11) the pin (9) comprises a narrowing or reduced-section zone (14) to create a weakened zone with lower mechanical strength and greater propensity to breakage.

4. Vehicle as claimed in any one of the preceding claims, wherein the front suspension lever (5) substantially triangularly shaped is substantially within a plane orthogonal to the yaw axis (Z) such that it is substantially parallel to the vehicle support plane (1).

5. Vehicle as claimed in any of the preceding claims, wherein the first vertex (6) of the front suspension lever (5) coupled to the corresponding front wheel (3) is shaped in the form of a bushing with its axis parallel to the yaw axis (Z).

6. Vehicle as claimed in any one of the preceding claims, wherein the front suspension lever (5) comprises a rib (15) extending substantially from the first vertex (6) coupled to the corresponding front wheel (3) to the rear vertex (8) coupled to the chassis (2) in such a manner as to increase in the event of an angled frontal impact the force acting on the weakened coupling between the front vertex (7) of the front suspension lever (5) and the chassis (2).

7. Vehicle as claimed in any one of the preceding claims, wherein the rear vertex (8) coupled to the frame (2) of the front suspension lever (5) is pivotally shaped and is inserted in a bushing (16) having an axis parallel to the roll axis (X) coupled to the frame (2).

8. Vehicle as claimed in any one of the preceding claims, wherein the first vertex (6) and the front vertex (7) of the lever (5) are substantially aligned along a direction parallel to the pitching axis (Y).
